))) Europäisches Patentamt

(19) European Patent Office

Office européen des brevets

(11) Numéro de publication : **0 186 527**
**B1**

(12) **FASCICULE DE BREVET EUROPÉEN**

(45) Date de publication du fascicule du brevet :
17.08.88

(51) Int. Cl.⁴ : **C 01 B   3/32**

(21) Numéro de dépôt : 85402057.5

(22) Date de dépôt : 23.10.85

(54) Procédé de reformage de méthanol et dispositif de mise en oeuvre.

(30) Priorité : 30.10.84 FR 8416561

(43) Date de publication de la demande :
02.07.86 Bulletin 86/27

(45) Mention de la délivrance du brevet :
17.08.88 Bulletin 88/33

(84) Etats contractants désignés :
AT BE CH DE FR GB IT LI LU NL SE

(56) Documents cités :
EP-A- 0 003 737
PATENTS ABSTRACTS OF JAPAN, vol. 7, no. 232 (C-190) [1377], 14 octobre 1983; & JP - A - 58 125 603 (TOUYOU ENNGINEERING K.K.) 26.07.1983
CHEMICAL ABSTRACTS, vol. 100, no. 8, 20 février 1984, page 134, no. 53886h, Columbus, Ohio, US; J. BOEGILD HANSEN et al.: "Reforming of methanol at medium temperature"
Oil and Gas Journal, Vol. 70, no. 21, 22.5.1972, P. 52-55

(73) Titulaire : **L'AIR LIQUIDE, SOCIETE ANONYME POUR L'ETUDE ET L'EXPLOITATION DES PROCEDES GEORGES CLAUDE**
75, Quai d'Orsay
F-75321 Paris Cédex 07 (FR)
CH DE GB IT LI LU NL SE AT
Catalysts and Chemical Europe"
Place du Champ de Mars, 2 Bte. No. 3
B-1050 Bruxelles (BE)
BE FR

(72) Inventeur : **Schurmans, Jacques**
157, rue Théo Decuyper
B-1200 Bruxelles (BE)
Inventeur : **Neukermans, Herman**
Muioenveld No. 9
B-2850 Keerberger (BE)
Inventeur : **Quibel, Jacques**
40, rue de La Muette
F-78600 Maisons-Lafitte (FR)
Inventeur : **Dupont, René**
14, rue Saint-Eloi
F-59500 Douai (FR)

(74) Mandataire : **Bouton Neuvy, Liliane et al**
L'Air liquide, Société Anonyme pour L'Etude et L'Exploitation des Procédés Georges Claude 75, Quai d'Orsay
F-75321 Paris Cédex 07 (FR)

## Description

La présente invention concerne un procédé de reformage de méthanol en vue de l'obtention d'un gaz à forte teneur en hydrogène et un dispositif de mise en œuvre.

On a recherché un procédé de reformage du méthanol en vue de l'obtention de gaz contenant des concentrations élevées en hydrogène, le solde du gaz étant surtout composé de dioxyde de carbone, de méthane, de vapeur d'eau et éventuellement d'azote selon lequel on procède à une opération de craquage de mélanges en proportions variables de vapeur d'eau et de vapeur de méthanol, en présence éventuellement d'azote, ou d'air et de gaz recyclés, après séparation éventuelle de certains composants, et de gaz en provenance de l'extérieur de l'unité.

Dans le domaine du reformage du méthanol, on connaît notamment par la demande européenne EP-A-0003737, un procédé de production de gaz de ville à forte teneur en méthane, par réaction catalytique du méthanol avec la vapeur, avec formation d'un mélange liquide eau-méthanol liquide dans un rapport pondéral 0,5 à 1,5 : 1 ; avec chauffage et vaporisation dudit mélange ; et réaction du mélange vaporisé sous une pression de 10 à 50 bars à température comprise entre 300 et 500 °C, dans un réacteur à lit fixe constitué par un catalyseur au nickel.

Selon le brevet FR-A-2 490 615 on conduit l'opération de craquage entre 130 et 950 °C, sous des pressions comprises entre 1 et 100 bars, en présence d'au moins deux types de catalyseurs, le premier plus spécialement destiné au craquage du méthanol, les second et suivants étant adaptés à la transformation des gaz produits dans la réaction de craquage en des produits gazeux, tels les hydrocarbures, le dioxyde de carbone, le monoxyde de carbone, des gaz réducteurs ; des gaz de synthèse et de l'hydrogène, les rapports molaires vapeur d'eau/méthanol et anhydride carbonique/méthanol étant compris entre 0,2 et 10 ; la réaction de vaporeformage étant conduite en présence de dioxyde de carbone, par adjonction directe de ce gaz, recyclage ou combinaison des deux modes d'introduction et l'apport de chaleur au cours de l'opération de vaporeformage se faisant par l'intermédiaire d'un fluide caloporteur, circulant à cocourant des fluides du procédé, ladite fraction pouvant être le gaz résiduaire d'une purification dudit gaz produit en vue de l'obtention d'hydrogène pur.

L'installation pour la mise en œuvre de ce procédé de reformage comprend essentiellemnt un réacteur tubulaire (5) intercalé entre un vaporisateur (4) du mélange réactionnel et un échangeur de chaleur (3) entre les gaz sortants et le liquide d'alimentation, un condenseur (6) et une unité de purification (11) et en outre un four de combustion de gaz résiduaire de purification (8).

Tout en conservant l'autonomie thermique du procédé quand la combinaison du vaporeformage du méthanol et de la purification sur tamis moléculaire est intégrée dans une production d'hydrogène, il a été trouvé des moyens permettant de porter le rendement de purification jusqu'à 80 %, de diminuer la consommation de méthanol de plusieurs pour cents, de réduire de manière très substantielle les coûts d'investissement en matériel et catalyseur surtout pour les grosses installations sans limitation de leur capacité, et de valoriser du méthanol impur, même souillé par des impuretés organiques, en tant que source d'hydrogène.

En outre, certains moyens mis en œuvre permettent la réalisation d'importantes économies d'apport calorifique, une moindre consommation d'énergie et une diminution des pertes d'énergie, ainsi qu'un accroissement de la vitesse de réaction de reformage.

En réalisant la vaporisation et la surchauffe du mélange réactionnel méthanol-eau, directement dans la zone de combustion du gaz résiduaire de purification, le rendement de purification peut atteindre 75 %, le procédé restant autonome thermiquement, avec un gain de 4 % sur la consommation de méthanol et éventuellement la supression d'un fluide caloporteur.

En accroissant la surchauffe des vapeurs méthanol-eau jusqu'à 500 °C la vitesse de la réaction de reformage augmente notablement dans la zone de niveau de température 500-300 °C, ce qui permet de diminuer le volume de catalyseur et de travailler en régime adiabatique jusqu'à 300 °C.

Dans un procédé de reformage du méthanol, en au moins deux stades, en soumettant le mélange réactionnel méthanol-eau, à une vaporisation et à une surchauffe, à température comprise entre 300 et 500 °C, réalisée directement dans la zone de combustion du gaz résiduaire, on obtient des améliorations très appréciables, et en procédant à cette surchauffe en deux fois par double passage, ou circulation du mélange réactant et du mélange sortant d'un stade de reformage dans la zone de combustion du gaz résiduaire, on peut réaliser la totalité de la réaction de reformage en régime adiabatique.

La conduite du procédé de reformage en régime adiabatique présente des avantages appréciables, constitués notamment par le remplacement du réacteur tubulaire par deux réacteurs simples du type récipients cylindriques verticaux contenant un lit de catalyseur en contact avec le corps de force. Ce remplacement représente une diminution très importante des coûts d'investissement surtout pour les grosses unités de fabrication de l'ordre de quelques milliers de Nm³/h. d'hydrogène ; de ce fait pratiquement il semble ne plus y avoir de limite supérieure pour la capacité de ces installations.

La conduite du procédé de reformage en régime adiabatique a pour conséquence avantageuse la suppression de toute la boucle du fluide caloporteur avec ses accessoires tels pompes de recirculation, vase d'expansion, échangeurs supplémentaires placés sur le circuit méthanol-eau. Ceci se traduit également par une économie d'investissement pour le matériel. De plus, le volume de catalyseur dans un réacteur adiabatique est moins important que dans un réacteur tubulaire, et il s'en suit aussi une économie financière.

La surchauffe des réactants en une seule fois dans les mêmes conditions que précédemment peut suffire pour amener toute la chaleur nécessaire à la réaction dans un réacteur unique par recyclage.

Cependant, dans certains cas, un combustible d'appoint peut apporter le complément de chaleur nécessaire à l'équilibre thermique du système adiabatique.

En outre, un fluide caloporteur issu de la production de l'installation industrielle peut fournir le complément de chaleur nécessaire pour le second stade de la réaction de reformage. Dans ces conditions, avec couplage d'un réacteur tubulaire à un réacteur adiabatique, le rendement de purification peut être élevé à son maximum de l'ordre de 80 %. Ce rendement de purification peut être obtenu dans chacun des modes de mises en œuvre précédents avec l'apport d'un combustible d'appoint sous forme de fuel par exemple.

Quand la fabrication est orientée vers un gaz particulier ayant une composition donnée, très différente des proportions classiques $CO_2 + 3H_2$, on peut avoir recours sous forme d'appoint au recyclage d'une fraction du courant gazeux issu de la réaction de reformage, et d'un courant gazeux de provenance extérieure.

On a également la possibilité de traiter un méthanol impur, souillé par des impuretés organiques tels alcools supérieurs, matières grasses, etc., ce qui évite, dans le cas d'hydrogénations catalytiques employant du méthanol comme diluant et/ou solvant, de le redistiller. Ainsi, une solution méthanolique impure peut être valoriser en tant que source d'hydrogène, en adaptant les moyens de mise en œuvre du procédé de reformage au type d'impureté.

La présence de produits lourds dans le méthanol entraîne un risque potentiel de formation de carbone.

Dans un reformage en deux stades, on peut éviter ce risque en introduisant seulement une fraction du méthanol et la totalité de la vapeur d'eau dans le premier stade de reformage en régime adiabatique, le complément en méthanol, après vaporisation et surchauffe, étant ajouté au mélange gazeux issu du premier stade de reformage, avant son entrée au second stade de reformage.

En n'introduisant qu'une partie du méthanol et la totalité de l'eau dans un premier réacteur on élève notablement le rapport molaire vapeur d'eau/carbone et l'on diminue ainsi la pression partielle des produits lourds en évitant le risque de formation de carbone.

Le traitement d'une solution méthanolique impure dont les impuretés sont sensibles aux hautes températures, exige une conduite du reformage dans des conditions relativement douces avec contrôle de température sans surchauffe importante des réactants. La mise en œuvre du procédé de vaporeformage en régime adiabatique dans au moins trois zones réactionnelles en série, ne provoque pas de surchauffe importante des réactants à l'entrée des réacteurs, de l'ordre de 430 °C et permet le traitement dans des conditions satisfaisantes d'une solution méthanolique polluée par des impuretés sensibles aux températures élevées.

Sur les figures des dessins annexés il est donné quelques exemples de réalisation d'installation selon le présent perfectionnement, les références chiffrées étant en accord avec celles de la figure unique du brevet FR-A-2 490 615.

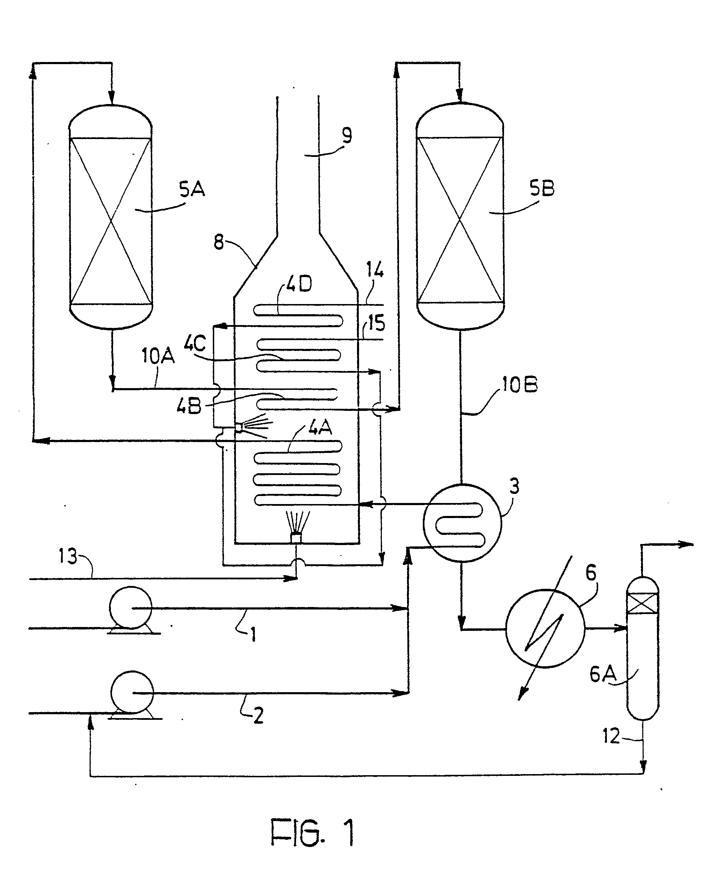

L'installation selon la figure 1 illustre la surchauffe des réactants méthanol-vapeur d'eau en deux fois et le fonctionnement en système adiabatique. Les liquides d'alimentation, le méthanol et l'eau introduits respectivement en (1) et (2) sont chauffés et partiellement évaporés dans l'échangeur de chaleur (3) par échange thermique avec le gaz sortant du réacteur tubulaire (5B), ledit gaz humide sortant étant ensuite refroidi dans le condenseur (6) avant d'entrer dans l'unité de purification non représentée. Le séparateur (6A) collecte le condensat sortant par le conduit (12). L'installation fonctionne avec équilibrage thermique du système par combustion d'un combustible d'appoint avec l'air, par l'intermédiaire d'un brûleur à l'intérieur du four (8) le gaz résiduaire par le conduit (13) est amené au four de combustion (8) pour y être brûlé, les fumées s'échappent en (9), la chaleur est récupérée par le mélange des réactants provenant de l'échangeur de chaleur (3) et circulant dans le serpentin (4A), et ce mélange surchauffé est soumis à un premier stade de reformage dans le réacteur adiabatique (5A), les gaz sortant du réacteur (5A) par la conduite (10A) puis circulant dans le serpentin (4B) sont surchauffés avant d'être traités dans le second réacteur adiabatique (5B) en série avec (5A). Le fluide combustible d'appoint (14) ainsi que l'air de combustion (15) étant respectivement préchauffés dans les dispositifs de surchauffe du type serpentin (4D) et (4C) à l'intérieur du four (8), avant combustion.

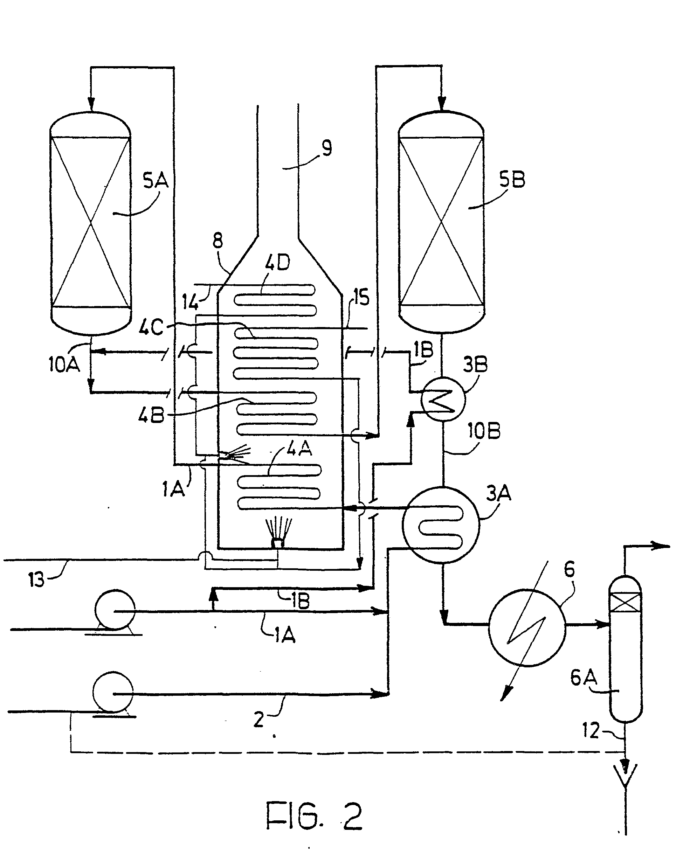

La figure 2 illustre une installation permettant le traitement de méthanol impur, souillé par des impuretés organiques, caractérisée par deux réacteurs adiabatiques en série (5A) et (5B), comme précédemment à l'intérieur du four de combustion (8) par des dispositifs de surchauffe du type serpentin (4A) et (4B) ayant la même fonction que dans l'installation de la figure 1, et par les dispositifs de préchauffage (4D) et (4C) du fluide combustible d'appoint (14) et de l'air de combustion (15). L'installation comporte deux conduites d'introduction (1A) et (1B) du méthanol, un premier échangeur de chaleur (3A) dans lequel sont chauffés et partiellement évaporés une fraction du méthanol et la totalité de l'eau, puis un second échangeur de chaleur (3B) dans lequel est chauffé l'autre fraction du méthanol ajouté au gaz provenant du premier stade de reformage dans la conduite (10A).

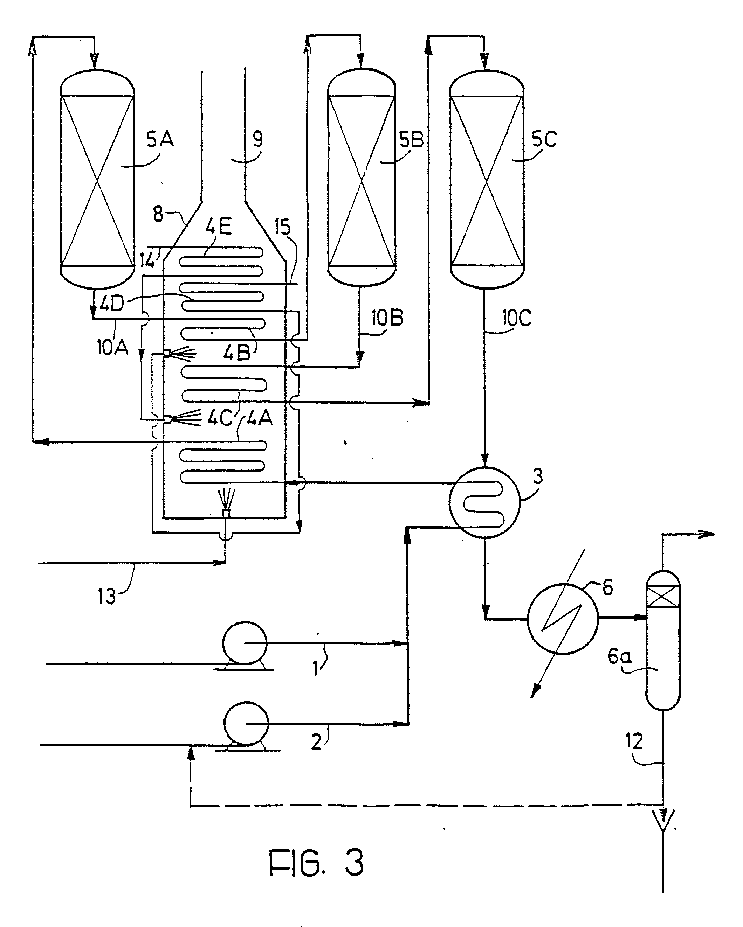

La figure 3 illustre une installation permettant de traiter un méthanol impur souillé par des impuretés sensibles à la chaleur, caractérisée par les trois réacteurs adiabatiques (5A), (5B), (5C) en série et par les serpentins (4A), (4B) et (4C) de surchauffe des réactants et des mélanges issus des reformages primaire et secondaire, situés à l'intérieur du four de combustion (8).

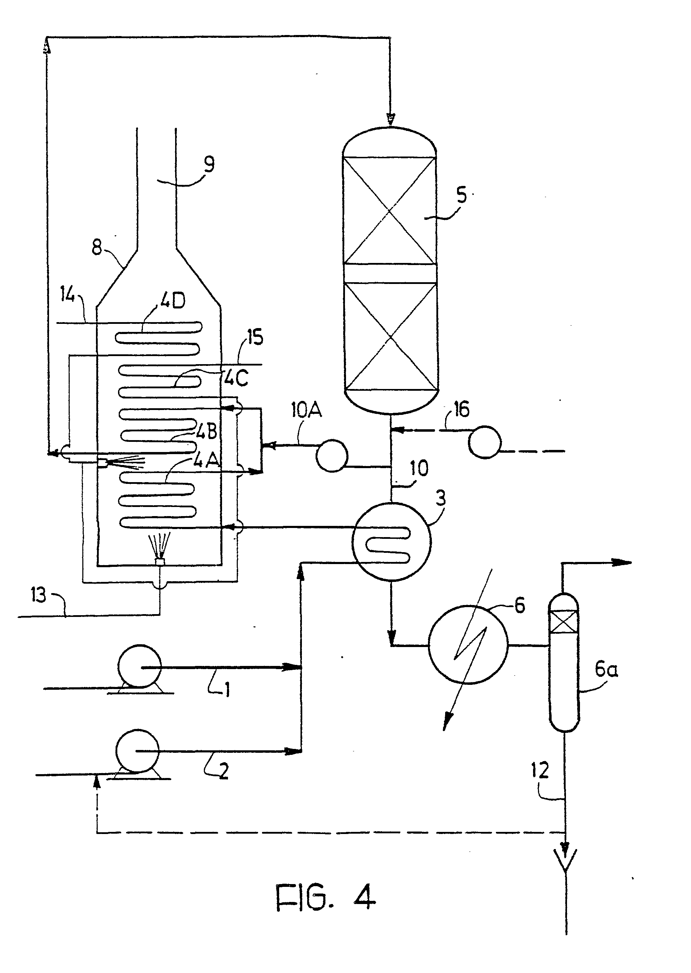

La figure 4 illustre une installation permettant la fabrication d'un gaz de composition donnée différente du standard, caractérisée par une conduite de recyclage (10A) d'une fraction du mélange gazeux (10) issue de reformage dans le mélange des réactants avec insertion sur le circuit entre la première et la deuxième surchauffe et une conduite (16) d'introduction d'un gaz de provenance extérieure contenant de l'hydrogène dans le mélange gazeux de reformage (10), avant le recyclage d'une partie de celui-ci.

Il est donné ci-après des exemples qui illustrent l'invention à titre non limitatif.

Exemple 1

L'illustration correspondant à la figure 1 se rapporte à une unité de 5 000 Nm³/h d'hydrogène dont les conditions opératoires sont : rapport molaire eau/méthanol égal à 2 ; pression 15 bars, rendement maximum de purification égal à 80 %. La réaction chimique s'effectue dans 2 réacteurs (5A) et (5B), situés en série et qui sont constitués simplement par 2 réacteurs cylindriques contenant le (les) catalyseur (s). Ils fonctionnent en adiabatique ; les réactants apportent la chaleur nécessaire au reformage du méthanol par la vapeur d'eau. Dans chaque réacteur se réalise la moitié de la transformation du $CH_3OH$, les gaz entrent à 500 °C et sortent à 300 °C.

Pour l'exemple cité, les réacteurs (5A) et (5B) contenant respectivement les catalyseurs de composition selon les exemples du brevet FR-A-2 490 615, les bilans massique et thermique se présentent comme suit : 3 083 kg/h de $CH_3OH$ en (1) et 3 466 kg/h de $H_2O$ en (2) sont mélangés liquides et chauffés sous pression jusque 189 °C dans le préchauffeur (3) où sont échangées 1 200 000 kcal/h. Dans le serpentin (4A) du four (8) ce mélange est vaporisé et surchauffé à 500 °C ; ce qui demande 3 100 000 kcal/h. Le réacteur (5A) permet le reformage de 48 % du méthanol à traiter et le mélange gazeux (10A) à 300 °C est constitué de 8 537 Nm³/h de composition : CO = 0,3 %, $CO_2$ = 11,7 %, $H_2$ = 36,1 %, $CH_3OH$ = 13,2 %, $H_2O$ = 38,7 %. Le serpentin (4B) en échangeant 740 000 kcal/h réchauffe ce fluide à 500 °C, qui entre alors dans le deuxième réacteur (5B) où s'effectue la 2ème partie de la réaction. L'effluent (10B) à 300 °C a la même composition volumétrique que celui de l'exemple 7 du brevet précité. Les 3 406 Nm³/h du gaz résiduaire (13) dont l'analyse indique : 36,7 % de $H_2$, 4,1 % de CO, 58,1 % de $CO_2$, 0,3 % de $CH_4 + CH_3OH$ et 0,8 % de $H_2O$ donneront 3 030 000 kcal/h sur les 3 840 000 kcal/h à échanger dans le four (8), soit près de 80 %. Avec 5 % de pertes sur les parois et les fumées quittant (9) à 250 °C, on utilise environ 95 kg/h de fuel d'appoint (14) pour équilibrer thermiquement le système ; le combustible liquide ainsi que la totalité de l'air de combustion (15) étant respectivement préchauffés en (4C) et (4D).

Exemple 2

Il concerne une unité de 600 Nm³/h d'hydrogène pur traitant un méthanol souillé contenant 1 % d'éthanol, 0,5 % de propanol et 3 % d'alcools supérieurs et de matières grasses.

Les conditions opératoires choisies dans ce cas seront les suivantes : à l'entrée de l'installation de reformage selon la figure 2, le rapport massique eau sur solution méthanolique est de 1,75 correspondant à un rapport molaire $H_2O/CH_3OH$ + lourds voisin de 3. Comme le rendement de gazéification du méthanol se révèle être plus faible que dans le cas du $CH_3OH$ standard et que la purification restitue 80 % de l'hydrogène fabriqué, l'introduction en (1) de solution méthanolique s'élève à 385 kg/h et en (2) on a 674 kg/h d'eau de procédé. Les condensats (12) ne sont pas recyclés étant donné que la plus grande partie des impuretés se retrouve dans cet effluent. La pression pour le système de purification est réglée à 20 bars. Le flux (1) est réparti en 2 courants ; (1A), représentant 40 % de la quantité de $CH_3OH$ introduit qui est mélangé avec toute l'eau de procédé (2), et le courant (1B) qui est vaporisé seul vers 180 °C dans l'échangeur (3B). Le mélange eau méthanol ainsi préparé (1A + 2) se trouve d'abord partiellement réchauffé dans (3A) puis vaporisé et surchauffé dans (4A) à une température de 470 °C. Le taux de vapeur élevé, de l'ordre de 7,5 permet d'effectuer cette dernière opération sans problème de carbone ainsi que de réaliser la réaction de reformage dans le réacteur (5A) contenant un catalyseur de composition pondérale : ZnO : 71 %, $Cr_2O_3$ : 22 %, $Al_2O_3$ : 7 % d'où les gaz sortent à 300 °C en (10A). La seconde partie de la solution méthanolique (1B) soit 231 kg/h sous forme vaporisée et légèrement surchauffée est mélangée à ce flux (10A) puis l'ensemble passant dans le four (8) se retrouve à 490 °C en sortie de (4B). Dans le 2ème réacteur (5B), contenant un catalyseur de composition pondérale identique à l'exemple 1, se termine la réaction de reformage du méthanol. Le mélange gazeux (10B) quittant (5B) à 300 °C sert d'abord à réchauffer, vaporiser et légèrement surchauffer les 231 kg/h du fluide (1B), puis à préchauffer jusque vers 140 °C les 828 kg/h du mélange (1A + 2). Le gaz résiduaire (13) issu de la purification ne suffisant pas à apporter toute la chaleur nécessaire au système, il faut un combustible d'appoint. Si celui-ci (14) se trouve réchauffé en (4D) ainsi que la totalité de l'air de combustion (15) en (4C), on aura besoin de l'ordre de 35 kg/h de fuel avec des fumées sortant en (9) à 250 °C.

## Exemple 3

Pour une unité également de 600 Nm³/h d'hydrogène selon la figure (3) avec un rapport molaire $H_2O/CH_3OH$ d'une valeur classique de 2, une pression de 25 bars et un rendement de purification de 80 %, la quantité requise de méthanol souillé est cette fois de 375 kg/h pour 422 kg/h d'eau de procédé. Ce mélange liquide réchauffé dans (3) à 203 °C se vaporise et ne surchauffe dans (4A) jusqu'à la température de 425 °C. Il entre dans le premier réacteur (5A) contenant un catalyseur où 30 % de la réaction de reformage a lieu, si bien que le fluide sortant en (10A) à 300 °C présente la composition suivante : CO = 0,2 %, $CO_2$ = 8,2 %, $H_2$ = 24,8 %, $CH_3OH$ + impuretés = 19,5 %, $H_2O$ = 47,3 %. Ce courant gazeux réchauffé à 440 °C dans (4B) pénètre dans le second secteur (5B) contenant 350 kg de catalyseur où réagissent 35 % supplémentaires de $CH_3OH$. En (10B), les gaz réactés à 300 °C possèdent la nouvelle composition : CO = 0,6 %, $CO_2$ = 14,5 %, $H_2$ = 44,8 %, $CH_3OH$ + impuretés = 8,2 %, $H_2O$ = 31,9 %. Un dernier passage dans l'échangeur (4C) du four (8) remonte le niveau de température à 435 °C, ce qui permet de réaliser la fin de la réaction du reformage dans le 3ème réacteur (5C) contenant 350 kg de catalyseur. Le gaz entrant à la purification ne diffère guère de l'ex. 7 du brevet FR-A-2 490 615. Les condensats rassemblant la majorité des impuretés éventuelles sont préférablement dans ce cas rejetés et non recyclés. A titre de comparaison avec l'exemple 3, environ 10 kg/h de combustible d'appoint, sous forme de fuel, sont à brûler en plus du gaz résiduaire (13) provenant de la purification pour satisfaire la demande calorifique du four ; les fumées quittent (9) vers 250 °C après avoir réchauffé le comburant (15) et le combustible (14) en (4D) et (4E).

## Exemple 4

Dans l'installation selon la figure 4, à la sortie du réacteur (5), un gaz (16) contenant de l'hydrogène ou autre élément peut être récupéré et introduit dans le système. Egalement une partie du fluide gazeux (10A) issu de (5) a la possibilité d'être recyclé.

Ce fluide de recyclage sert donc à la fois de fluide caloporteur et de moyen de faire varier la composition du gaz, par déplacement des équilibres chimiques. En choisissant le cas le plus simple au taux de recyclage 1/1, soit un volume de gaz recyclé en (10A) pour un volume extrait en (10) (ce qui n'affecte pas la composition du gaz) il est démontré que la réaction de reformage s'effectue en une seule passe de surchauffe des réactants.

Reprenons l'exemple n° 2, après réchauffage des 6 549 kg/h du mélange liquide méthanol-eau-(1 + 2) dans l'échangeur (3), ces fluides sont vaporisés et légèrement surchauffés dans (4A). A ces 6 741 Nm³/h de réactants s'ajoutent la moitié du courant gazeux sortant à 300 °C, du réacteur (5), soit 8 537 Nm³/h. L'ensemble de ces 15 008 Nm³/h est alors surchauffé dans (4B) jusqu'à 495 °C, ce qui suffit à fournir la chaleur de réaction du reformage adiabatique des 3 083 kg/h de méthanol. La composition du flux gazeux quittant (5) est la même que dans l'exemple cité n° 2 mais le débit horaire est double, c'est-à-dire 17 074 Nm³/h. La quantité de chaleur à fournir dans le four demeure identique mais il faut ajouter l'énergie de recirculation du gaz (10A). Pour indication dans l'exemple présent, il faudra installer un moteur d'environ 100 cv pour recompresser de 1,5 bar les 8 037 Nm³/h de gaz à recycler.

## Revendications

1. Procédé de reformage du méthanol en vue de l'obtention d'un gaz à forte teneur en hydrogène, selon lequel la vaporisation et la surchauffe du mélange réactionnel méthanol-eau sont réalisées directement à l'intérieur de la zone de combustion du gaz résiduaire, de préférence à une température comprise entre 300 et 500 °C, caractérisé en ce que le reformage du méthanol est mis en œuvre en au moins deux stades en procédant à la dite surchauffe par double passage avec circulation du mélange réactant et circulation du mélange sortant du premier stade de reformage, à l'intérieur de la zone de combustion du gaz résiduaire ; la totalité de la réaction de reformage étant conduite en régime adiabatique.

2. Procédé de reformage du méthanol selon la revendication 1, caractérisé en ce qu'un combustible d'appoint apporte le complément de chaleur nécessaire à l'équilibre thermique du système adiabatique.

3. Procédé de reformage du méthanol selon la revendication 1, caractérisé en ce qu'un fluide caloporteur fournit le complément de chaleur nécessaire au second stade de reformage.

4. Procédé de reformage du méthanol selon une quelconque des revendications 1 à 3, caractérisé en ce que la réaction de reformage est conduite avec recyclage d'une fraction du courant gazeux issu de la réaction de reformage et d'un courant gazeux de provenance extérieure.

5. Procédé de reformage du méthanol selon la revendication 1, caractérisé en ce qu'une fraction du méthanol et la totalité de la vapeur d'eau sont introduites dans le premier stade de reformage, le complément en méthanol après vaporisation et surchauffe étant ajouté au mélange gazeux issu du premier stade de reformage, et avant son entrée au second stade de reformage.

6. Procédé de reformage du méthanol selon la revendication 1, caractérisé en ce que le vaporeformage en régime adiabatique est conduit dans au moins trois zones réactionnelles en série, la température d'entrée dans chacune des dites zones étant de l'ordre de 430 °C.

7. Installation pour la mise en œuvre du pro-

cédé de reformage du méthanol selon la revendication 2, caractérisé en ce qu'elle comprend les deux réacteurs adiabatiques en série (5A) et (5B), les dispositifs de vaporisation et surchauffe du type serpentin (4A) et (4B) et les circuits (14, 15) du fluide combustible d'appoint et de l'air ainsi que leurs dispositifs de surchauffe (4D-4C) placés à l'intérieur du four de combustion (8).

8. Installation pour la mise en œuvre du procédé de reformage du méthanol selon la revendication 7, caractérisée en ce qu'elle comprend les trois réacteurs adiabatiques (5A, 5B et 5C) montés en série, les dispositifs de vaporisation et surchauffe (4A, 4B, 4C) et les circuits (14, 15) du fluide combustible d'appoint et de l'air ainsi que leurs dispositifs de surchauffe (4D, 4E).

9. Installation pour la mise en œuvre du procédé de reformage du méthanol selon la revendication 7, caractérisée en ce qu'elle comporte les deux conduites d'introduction du méthanol (1A) et (1B) et les échangeurs de chaleur (3A) et (3B).

10. Installation pour la mise en œuvre du procédé de reformage du méthanol selon la revendication 4, caractérisée en ce qu'elle comporte une conduite de recyclage (10A) insérée sur le circuit entre les dispositifs de surchauffe (4A) et (4B) à l'intérieur du four à combustion (8) et une conduite (16) d'introduction du courant gazeux de provenance extérieure sur la conduite (10) au-dessous de (10A).

**Claims**

1. Process for reforming methanol with a view to obtaining a gas with a high hydrogen content, in accordance with which the vaporisation and the superheating of the methanol-water reaction mixture are directly effected within the combustion zone of the residual gas, preferably at a temperature which is between 300 and 500 ºC, characterised in that the reforming of the methanol is carried out in at least two stages by proceeding to the said superheating by a double passage with circulation of the reactant mixture and circulation of the mixture leaving the first reforming stage, within the combustion zone of the residual gas ; the entire reforming reaction being conducted with an adiabatic procedure.

2. Methanol-reforming process according to claim 1, characterised in that an added combustible supplies the complement of heat which is necessary for the thermal equilibrium of the adiabatic system.

3. Methanol-reforming process according to claim 1, characterised in that a heat-providing fluid supplies the complement of heat which is necessary for the second reforming stage.

4. Methanol-reforming process according to any of claims 1 to 3, characterised in that the reforming reaction is conducted with recycling of a fraction of the gaseous flow resulting from the reforming reaction and a gaseous flow of external origin.

5. Methanol-reforming ·process according to claim 1, characterised in that a fraction of the methanol and all of the steam are introduced into the first reforming stage, the complement of methanol, after vaporisation and superheating, being added to the gaseous mixture leaving the first reforming stage, and before its entry into the second reforming stage.

6. Methanol-reforming process according to claim 1, characterised in that the reforming in vapour stage under adiabatic conditions is conducted in at least three reaction zones in series, the temperature of entry into each of the said zones being of the order of 430 ºC.

7. Installation for carrying into effect the methanol-reforming process according to claim 2, characterised in that it comprises the two adiabatic reactors (5A) and (5B) in series, the vaporising and superheating means of the coil type (4A) and (4B) and the circuits (14, 15) for the added combustible fluid and air and also their superheating means (4D-4C) placed within the combustion furnace (8).

8. Installation for carrying into effect the methanol-reforming process according to claim 7, characterised in that it comprises the three adiabatic reactors (5A, 5B and 5C) mounted in series, the vaporising and superheating means (4A, 4B, 4C) and the circuits (14, 15) for the added combustible fluid and the air, as well as their superheating means (4D, 4E).

9. Installation for carrying into effect the methanol-reforming process according to claim 7, characterised in that it comprises the two conduits (1A) and (1B) for introduction of methanol and the heat exchangers (3A) and (3B).

10. Installation for carrying into effect the methanol-reforming process according to claim 4, characterised in that it comprises a recycling conduit or pipe (10A) included in ·the circuit between the superheating means (4A) and (4B) inside the combustion furnace (8) and a pipe (16) for introduction of the gas flow originating from outside on the pipe or conduit (10) above (10A).

**Patentansprüche**

1. Verfahren zum Reformieren von Methanol, um ein Gas mit hohem Wasserstoffgehalt zu erhalten, bei dem die Verdampfung und das Überhitzen des Reaktionsgemisches von Methanol und Wasser direkt im Inneren der Verbrennungszone des Restgases, vorzugsweise bei einer Temperatur zwischen 300 und 500 ºC erfolgen, dadurch gekennzeichnet, daß das Reformieren des Methanols in wenigstens zwei Stufen durchgeführt wird, wobei man bei diesem Überhitzen mit einem doppelten Durchgang mit Zirkulation des Reaktionspartnergemisches und Zirkulation des die erste Reformierstufe verlassenden Gemisches im Inneren der Verbrennungszone des Restgases arbeitet und wobei die Gesamtheit der Reformierreaktion in adiabatischer Weise durchgeführt wird.

2. Verfahren zum Reformieren von Methanol nach Anspruch 1, dadurch gekennzeichnet, daß ein Zusatzbrennstoff den Wärmeabgleich erbringt, der für das thermische Gleichgewicht des adiabatischen Systems erforderlich ist.

3. Verfahren zum Reformieren von Methanol nach Anspruch 1, dadurch gekennzeichnet, daß ein Wärmeträgerfließmittel den Wärmeabgleich erbringt, der für die zweite Reformierstufe erforderlich ist.

4. Verfahren zum Reformieren von Methanol nach einem der Ansprüche 1 bis 3, dadurch gekennzeichnet, daß die Reformierreaktion unter Rückführung einer Fraktion des gasförmigen Stromes, der aus der Reformierreaktion stammt, und eines gasförmigen Stromes, der von außen stammt, durchgeführt wird.

5. Verfahren zum Reformieren von Methanol nach Anspruch 1, dadurch gekennzeichnet, daß eine Fraktion des Methanols und die Gesamtheit des Wasserdampfes in die erste Reformierstufe eingeführt werden, wobei der Rest des Methanols nach Verdampfung und Überhitzung dem Gasgemisch, das aus der ersten Reformierstufe stammt, vor seinem Eintritt in die zweite Reformierstufe zugesetzt wird.

6. Verfahren zum Reformieren von Methanol nach Anspruch 1, dadurch gekennzeichnet, daß die Dampfbildung in adiabatischer Weise in wenigstens drei Reaktionszonen in Reihe durchgeführt wird, wobei die Eintrittstemperatur in jede dieser Zonen in der Größenordnung von 430 °C liegt.

7. Vorrichtung zur Durchführung des Verfahrens zum Reformieren von Methanol nach Anspruch 2, dadurch gekennzeichnet, daß sie die beiden diabatischen Reaktoren in Reihe (5A) und (5B), die Vorrichtungen zum Verdampfen und Überhitzen vom Schlangentyp (4A) und (4B) und die Kreisläufe (14, 15) von Zusatzbrennstofffließmittel und Luft sowie deren Überhitzungsvorrichtungen (4D) bis (4C) im Inneren des Verbrennungsofens (8) angeordnet umfaßt.

8. Vorrichtung zur Durchführung des Verfahrens zum Reformieren von Methanol nach Anspruch 7, dadurch gekennzeichnet, daß sie die drei adiabatischen Reaktoren (5A, 5B und 5C) in Reihe geschaltet, die Vorrichtungen zur Verdampfung und Überhitzung (4A, 4B und 4C) und die Kreisläufe (14, 15) für Zusatzbrennstofffließmittel und Luft sowie ihre Überhitzungsvorrichtungen (4D, 4E) umfaßt.

9. Vorrichtung zur Durchführung des Verfahrens zum Reformieren von Methanol nach Anspruch 7, dadurch gekennzeichnet, daß sie die beiden Methanoleinführungsleitungen (1A) und (1B) und die Wärmetauscher (3A) und (3B) umfaßt.

10. Vorrichtung zur Durchführung des Verfahrens zum Reformieren von Methanol nach Anspruch 4, dadurch gekennzeichnet, daß sie eine Rückführleitung (10A), die in den Kreislauf zwischen den Überhitzungsvorrichtungen (4A) und (4B) im Inneren des Verbrennungsofens (8) eingebaut ist, und eine Leitung (16) zur Einführung eines von außen stammenden gasförmigen Stromes in der Leitung (10) oberhalb von (10A) aufweist.

FIG. 1

FIG. 2

FIG. 3

FIG. 4

4